# EUROPÄISCHE PATENTSCHRIFT

(11) **EP 2 913 576 B1**
(45) Veröffentlichungstag und Bekanntmachung des Hinweises auf die Patenterteilung: **31.05.2017**
(21) Anmeldenummer: 15155517.4
(22) Anmeldetag: 18.02.2015
(51) Int. Cl.: F16M 11/04, F16M 13/02, B60R 11/00, B61D 37/00

(54) **Schienenfahrzeug mit Halterung für ein elektronisches Gerät und Verfahren zur Herstellung einer solchen Halterung**
Rail vehicle with holder for an electronic device and method for manufacturing such a holder
Véhicule sur rail doté d'une fixation pour un appareil électronique et procédé de fabrication d'une telle fixation

(30) Priorität: 21.02.2014 DE 102014002214
(43) Veröffentlichungstag der Anmeldung: 02.09.2015
(73) Patentinhaber: Bombardier Transportation GmbH, 10785 Berlin (DE)
(72) Erfinder: Högemann, Philippe, 28279 Bremen (DE)
(74) Vertreter: Cohausz & Florack

(56) Entgegenhaltungen:
- EP-A1- 1 068 818
- WO-A1-2009/012033
- CH-A- 246 366
- DE-A1-102010 005 689
- DE-A1-102011 120 194
- DE-U1-202006 015 182
- US-A- 4 921 444
- US-A1- 2005 017 147

## Beschreibung

Die Erfindung betrifft eine Halterung für ein elektronisches Gerät, insbesondere für das Netzteil eines Akku-Ladegeräts eines Elektrofahrrads, mit einem Hauptkörper, der sich von einem oberen Ende in vertikaler Richtung zu einem unteren Ende erstreckt und der eine Vorderseite aufweist, mit mindestens einem Flügel, der mit dem Hauptkörper verbunden ist und sich wenigstens abschnittsweise vom Hauptkörper weg erstreckt, wobei der mindestens eine Flügel zusammen mit dem Hauptkörper einen Aufnahmeraum zur Aufnahme des elektronischen Geräts bildet und den Aufnahmeraum ausgehend vom Hauptkörper zumindest teilweise hintergreift.

Ferner betrifft die Erfindung ein Schienenfahrzeug mit einem Wagenkasten, der eine Wagenkastenwand aufweist, wobei neben einem Abschnitt der Wagenkastenwand ein Fahrradstellplatz vorgesehen ist.

Schließlich betrifft die Erfindung ein Verfahren zur Herstellung einer Halterung für ein elektronisches Gerät.

Schienenfahrzeuge sind heutzutage häufig mit Fahrradstellplätzen ausgestattet. Auf solchen Stellplätzen können neben herkömmlichen Fahrrädern auch Elektrofahrräder, sogenannte E-Bikes, vom Fahrgast während der Fahrt abgestellt werden. Um Fahrgästen mit einem Elektrofahrrad die Möglichkeit zu bieten, den Akku (Akkumulator) zum Betrieb des Elektromotors während des Aufenthalts im Schienenfahrzeug laden zu können, ist es wünschenswert, im Wagenkasten des Schienenfahrzeugs im Bereich des Fahrradstellplatzes Steckdosen zur Stromversorgung vorzusehen.

Problematisch ist bisher, dass zum Aufladen der Akkus eines Elektrofahrrads ein separates Akku-Ladegerät bestehend aus einem Netzteil und Verbindungskabeln verwendet werden muss. Wird der Akku des Elektrofahrrads über das Akku-Ladegerät mit der stromführenden Steckdose verbunden, liegt oder hängt das Netzteil in der Regel lose im Bereich zwischen Fahrrad und Steckdose. Dies ist unter anderem aus Komfortgründen und Sicherheitsgründen nachteilhaft.

Aus dem Stand der Technik sind auch verschiedene Halterungen für elektronische Geräte, insbesondere Mobiltelefone, bekannt, die einen Hauptkörper aufweisen, mit dem die Halterung an einer Wand montierbar ist, und die zumindest eine mit dem Hauptkörper verbundene Lasche aufweisen, die sich vom Hauptkörper weg erstreckt und zusammen mit dem Hauptkörper einen Aufnahmeraum zur Aufnahme des elektronischen Geräts bildet.

Aus der DE 20 2006 015 182 U1 ist beispielsweise eine Halterung mit einem Hauptkörper und zwei davon ausgehendenden flügelförmigen Laschen bekannt, die zusammen mit dem Hauptkörper den Aufnahmeraum für das elektronische Gerät bilden, indem ein von der Vorderseite des Hauptkörpers beabstandeter Abschnitt jedes der beiden Flügel den Hauptkörper in einer Richtung senkrecht zur Vorderseite des Hauptkörpers teilweise überdeckt. Auf diese Weise entsteht ein Zwischenraum zwischen Hauptkörpervorderseite und den Flügelinnenseiten, in den das elektronische Gerät eingeführt werden kann. Die beiden flügelförmigen Laschen sind dabei an den beiden Seiten des Hauptkörpers angeordnet und vor dem Hauptkörper mit einer Schnur zusammengebunden und dadurch aneinander fixiert. Die Schnur weist wie ein Schnürsenkel zwei Enden auf, die miteinander verknotet werden können. Mit Hilfe der Schnur und der individuellen Verknotungsmöglichkeit kann die Größe des Zwischenraums zwischen der Hauptkörpervorderseite und den Flügelinnenseiten variiert und an verschiedene Gerätegrößen angepasst werden. Damit das Gerät außerdem nach unten hin einen zusätzlichen Halt hat, sind ferner zwei vorspringende Anschlagteile vorgesehen, die eine Auflage für das elektronische Gerät bilden.

Die bekannte Halterung für elektronische Geräte ist relativ komplex aufgebaut und darüber hinaus sehr empfindlich, da zum Gewährleisten der Größenanpassung der Halterung ein weiches und besonders flexibles Material für den Hauptkörper und die Flügel verwendet wird. Für den Einsatz in einem Schienenfahrzeug, insbesondere im Bereich eines Fahrradstellplatzes, ist diese Halterung daher nur bedingt geeignet. Die Dokumente US492144, CH246366, EP1068818 und DE102010005689 gehören auch zu der Stand der Technik. Es ist daher eine Aufgabe der vorliegenden Erfindung, eine Halterung für ein elektronisches Gerät zu schaffen, die für den Einsatz in einem Schienenfahrzeug, insbesondere zum Halten eines Netzteils eines Akkuladegeräts eines Elektrofahrrads, besonders geeignet ist.

Die zuvor hergeleitete und aufgezeigte Aufgabe wird gemäß einer ersten Lehre der vorliegenden Erfindung bei einer Halterung für ein elektronisches Gerät, insbesondere für das Netzteil eines Akku-Ladegeräts eines Elektrofahrrads, mit einem Hauptkörper, der sich von einem oberen Ende in vertikaler Richtung zu einem unteren Ende erstreckt und der eine Vorderseite aufweist, mit mindestens einem Flügel, der mit dem Hauptkörper verbunden ist und sich wenigstens abschnittsweise vom Hauptkörper weg erstreckt, wobei der mindestens eine Flügel zusammen mit dem Hauptkörper einen Aufnahmeraum zur Aufnahme des elektronischen Geräts bildet und den Aufnahmeraum ausgehend vom Hauptkörper zumindest teilweise hintergreift, dadurch gelöst, dass sich der Aufnahmeraum in Richtung vom oberen Ende zum unteren Ende des Hauptkörpers verjüngt, wobei insbesondere der Abstand, in einer Richtung senkrecht zur Vorderseite des Hauptkörpers, zwischen der dem Hauptkörper zugekehrten Innenfläche des mindestens einen Flügels und der Vorderseite des Hauptkörpers in Richtung vom oberen Ende zum unteren Ende des Hauptkörpers abnimmt.

Mit der vom oberen Ende des Hauptkörpers zum unteren Ende verlaufenden vertikalen Richtung ist die Richtung gemeint, in der das Akku-Ladegerät in die Halterung eingeschoben wird. Diese Richtung ist im bestimmungsgemäß montierten Zustand der Halterung die Schwerkraftrichtung.

Der Aufnahmeraum, der von Hauptkörper und Flügel bzw. Flügeln gebildet wird, ist der Raum zwischen den Innenflächen bzw. innerhalb der Konturen (Innenkonturen) der Halterung, also innerhalb von Hauptkörper und Flügel(n). Der Aufnahmeraum ist also der Raum, der für die Aufnahme des elektronischen Geräts zur Verfügung steht. Insbesondere bildet der mindestens eine Flügel zusammen mit dem Hauptkörper den Aufnahmeraum dadurch, dass ein von der Vorderseite des Hauptkörpers beabstandeter Abschnitt des mindestens einen Flügels den Hauptkörper in einer Richtung senkrecht zur Vorderseite des Hauptkörpers zumindest teilweise überdeckt (überlagert),

Indem sich der Aufnahmeraum in Richtung vom oberen Ende zum unteren Ende des Hauptkörpers verjüngt und insbesondere der Abstand zwischen Hauptkörper und Flügel(n) in vertikaler Richtung bzw. in Schwerkraftrichtung abnimmt, wird eine Trichterform geschaffen, die bewirkt, dass ein in vertikaler Richtung in die Halterung eingeführtes elektronisches Gerät an einer Stelle innerhalb der Halterung sowohl den bzw. die Flügel als auch den Hauptkörper berührt, wodurch es an dieser Stelle in vertikaler Richtung einen Anschlag erfährt und gehalten wird. Die Trichterform hat den weiteren Vorteil, dass Geräte unterschiedlicher Form und Größe von der Halterung aufgenommen und gehalten werden können.

Grundsätzlich kann die Halterung nur einen einzigen Flügel aufweisen, der mit dem Hauptkörper verbunden ist, wobei dieser Flügel dann in geeigneter Weise gebogen sein muss, um den trichterförmigen Aufnahmeraum zu bilden. Vorzugsweise weist die Halterung aber mindestens zwei Flügel auf, die mit dem Hauptkörper verbunden sind und sich vom Hauptkörper weg erstrecken, wobei die Flügel zusammen mit dem Hauptkörper den Aufnahmeraum bilden, wobei bzw. indem ein von der Vorderseite des Hauptkörpers beabstandeter Abschnitt der Flügel den Hauptkörper in der Richtung senkrecht zur Vorderseite des Hauptkörpers zumindest teilweise überdeckt.

Eine solche Halterung ist insbesondere spiegelsymmetrisch (zu der vertikalen Richtung) aufgebaut.

Wenn vorliegend von einem Flügel die Rede ist, ist ein ein- oder mehrteiliges Element gemeint, welches an einem Ende, dem sogenannten Verbindungsende, mit dem Hauptkörper verbunden ist und dessen anderes Ende vom Hauptkörper weg weist. Bevorzugt ist eine einteilige Ausführung des Flügels bzw. der Flügel. Grundsätzlich ist aber auch eine mehrteilige Ausführung denkbar, bei der der jeweilige Flügel beispielsweise aus mehreren mit dem Hauptkörper verbundenen Lamellen besteht.

Wie zuvor erläutert, ist der Aufnahmeraum trichterförmig ausgebildet. Um dies zu erreichen ist es denkbar, dass der Querschnitt, bei einem Schnitt in Richtung senkrecht zur Vorderansicht des Hauptkörpers, des Aufnahmeraums in einem ersten (oberen) Abschnitt des Aufnahmeraums größer als in einem zweiten (unteren) Abschnitt des Aufnahmeraums ist, und zwar auch unabhängig von (alternativ zu) dem Merkmal, dass der Abstand, in einer Richtung senkrecht zur Vorderseite des Hauptkörpers, zwischen der dem Hauptkörper zugekehrten Innenfläche des mindestens einen Flügels und der Vorderseite des Hauptkörpers in Richtung vom oberen Ende zum unteren Ende des Hauptkörpers abnimmt. Die Begriffe "oben" und "unten" beziehen sich im vorliegenden Text immer auf die zuvor definierte vertikale Richtung bzw. Einschubrichtung des elektronischen Geräts.

Gemäß einer Ausgestaltung der erfindungsgemäßen Halterung ist vorgesehen, dass der Aufnahmeraum mit einer im Bereich des oberen Endes des Hauptkörpers angeordneten Einführöffnung und einer im Bereich des unteren Endes des Hauptkörpers angeordneten Ausführöffnung versehen ist, wobei der Aufnahmeraum einen im Wesentlichen in vertikaler Richtung verlaufenden, barrierefreien Spalt aufweist, der die Einführöffnung mit der Ausführöffnung verbindet. Barrierefrei bedeutet, dass der Aufnahmeraum über seine gesamte vertikale Erstreckung durch den Spalt (über die gesamte Spaltlänge) zugänglich ist und sich kein Hindernis zwischen der Vorderseite des Hauptkörpers und dem Spalt bzw. den Flügelenden befindet. Dies hat den Vorteil, dass das Anschlusskabel zum Anschließen des Netzteils ans Fahrrad mit oder nach dem Einlegen des Netzteils in die Halterung durch den Spalt in die Ausführöffnung verlegt werden kann, ohne dieses in die Einführ- und Ausführöffnung "einfädeln" zu müssen.

Gemäß einer weiteren Ausgestaltung der erfindungsgemäßen Halterung geht bzw. gehen der oder die Flügel seitlich vom Hauptkörper aus, beginnen also am seitlichen Ende bzw. am Rand des Hauptkörpers. Eine solche Halterung läßt sich auf besonders einfache Weise herstellen, indem ein Bauteil, insbesondere ein plattenförmiges Bauteil, seitlich umgebogen wird, wobei der umgebogene Abschnitt jeweils einen Flügel bildet.

Insbesondere ist bzw. sind der oder die Flügel zusammen mit dem Hauptkörper einstückig ausgebildet. "Einstückig" bedeutet, dass Flügel und Hauptkörper aus einem Stück geformt (integral gebildet) sind. Auf diese Weise läßt sich, wie bereits zuvor beschrieben, die erfindungsgemäße Halterung auf einfache Weise durch Umformen eines Ausgangskörpers herstellen. Das Material des Ausgangskörpers bzw. zugrundeliegenden Bauteils ist vorzugsweise Metall oder Kunststoff. Beide Materialien lassen sich plastisch verformen und sind so steif, dass die durch Umbiegen geformten Flügel nach dem Verformungsvorgang ohne Hilfsmittel in Position bleiben. Besonders bevorzugt handelt es sich bei dem Ausgangskörper um ein Blech, das heißt eine Metallplatte. In diesem Fall sind der oder die Flügel zusammen mit dem Hauptkörper insbesondere von einem einzigen Blechumformteil gebildet. Ein Blech- bzw. Metallteil hat noch eine höhere Stabilität und ist damit noch robuster, was insbesondere bei der Verwendung in einem Schienenfahrzeug im Bereich eines Fahrradstellplatzes vorteilhaft ist, da sowohl das elektronische Gerät als auch eine eventuell integrierte stromführende Steckdose besonders gut vor äußeren Krafteinwirkungen geschützt ist.

Bevorzugt weisen die den Aufnahmeraum begrenzenden Innenwände des Hauptkörpers und/oder des wenigstens einen Flügels keine Vorsprünge und/oder Vertiefungen auf, was sich besonders einfach durch die vorangehend beschriebene Ausbildung bzw. das vorangehend beschriebene Material des Ausgangskörpers erreichen läßt. Auf diese Weise können sich im Betrieb der Halterung keine Flüssigkeiten oder Verschmutzungen ansammeln.

Gemäß noch einer Ausgestaltung der erfindungsgemäßen Halterung weist der Hauptkörper die gleiche Materialstärke wie der oder die Flügel auf. Insbesondere ist auch die Materialstärke innerhalb des Hauptkörpers und/oder innerhalb jedes Flügels gleichmäßig. Die Materialstärke liegt insbesondere in einem Bereich von 0,5 bis 3 mm, bevorzugt von 1 bis 2 mm. Auch kann vorgesehen sein, dass der Hauptkörper und/oder der oder die Flügel einen überwiegend ebenen Verlauf hat bzw. haben. "Überwiegend" bedeutet, dass der größte Teil der vorderen und hinteren bzw. äußeren und inneren Oberfläche von Hauptkörper und/oder Flügel eben ist. Insbesondere ist die Oberfläche lediglich im Bereich der Biegung nicht eben, ansonsten aber vollständig eben.

Gemäß noch einer weiteren Ausgestaltung der erfindungsgemäßen Halterung weist bzw. weisen der oder die Flügel jeweils ein Verbindungsende auf, mit dem sie mit dem Hauptkörper verbunden sind, wobei der oder die Flügel außer mit dem Verbindungsende nicht am Hauptkörper fixiert sind, und zwar weder unmittelbar, noch mit Hilfsmitteln wie separaten Verbindungselementen (Schnüren, etc.). Wie bereits erläutert, sind die Flügel aus einem Material geformt, welches eine ausreichende Steifigkeit hat, um die Flügel in ihrer Ausgangsposition zu halten, zumindest überwiegend, auch wenn die Flügel durch eine von außen einwirkende Kraft (wie beim Einführen des elektronischen Geräts) beaufschlagt werden. Wenn das elektronische Gerät in die Halterung eingeführt wird, kann es durchaus auftreten, dass sich die Flügel etwas nach außen (vom Hauptkörper weg) bewegen, wobei eine Klemmkraft erzeugt wird, die das elektronische Gerät in der Halterung hält. Entsprechend brauchen die Flügel auch nicht aneinander fixiert sein und brauchen einander insbesondere nicht berühren. Wie bereits erläutert kann auch ein barrierefreier Spalt zwischen den vom Hauptkörper wegweisenden Flügelkanten (Flügelenden) vorgesehen sein, wodurch sich ein elektronisches Gerät, welches Verbindungskabel aufweist, leichter in der Halterung anordnen läßt, insbesondere dann, wenn bereits ein Verbindungskabel mit einem aufzuladenden Akku verbunden worden ist, bevor das Akku-Ladegerät in die Halterung eingesetzt worden ist.

Gemäß wieder einer weiteren Ausgestaltung der erfindungsgemäßen Halterung weist diese eine stromführende Steckdose (Steckdose zur Stromversorgung, zum Beispiel SchuKo-Steckdose) auf. Die Steckdose ist insbesondere in den Hauptkörper integriert, wozu der Hauptkörper beispielsweise einen Ausschnitt aufweist, welcher die Steckdose aufnimmt. Das Integrieren der Steckdose in den Hauptkörper hat den Vorteil, dass auch ein Laie die Steckdose als Bestandteil der Halterung bzw. beides zusammen als Einheit wahrnimmt und intuitiv die Steckdose als zum Laden der eigenen Akkus erkennt und verwendet. Grundsätzlich ist es aber auch denkbar, die Steckdose benachbart zum Hauptkörper anzuordnen, vorzugsweise vertikal oberhalb des Hauptkörpers.

In dem Fall, dass die Steckdose in die Halterung integriert ist, ist es wie bereits angedeutet wünschenswert, wenn die Steckdose innerhalb der Halterung möglichst geschützt angeordnet ist, um gerade im Bereich eines Fahrradstellplatzes äußeren Krafteinwirkungen möglichst nicht ausgesetzt zu werden. Insbesondere steht die Steckdose in der Richtung senkrecht zur Vorderseite des Hauptkörpers nicht über die äußere Kontur des Flügels oder der Flügel hervor. Der oder die Flügel bilden dadurch einen Schutzkäfig für die Steckdose.

Die Aufgabe wird ferner gemäß einer zweiten Lehre der vorliegenden Erfindung bei einem Schienenfahrzeug mit einem Fahrradstellplatz dadurch gelöst, dass im Bereich des Fahrradstellplatzes eine wie zuvor beschriebene Halterung montiert ist. Das Schienenfahrzeug weist insbesondere einen Wagenkasten mit einer Wagenkastenwand auf, wobei neben einem Abschnitt der Wagenkastenwand der Fahrradstellplatz vorgesehen ist, wobei an dem Abschnitt der Wagenkastenwand die wie zuvor definierte Halterung montiert ist.

Eine solche Halterung hat, gerade in einem Schienenfahrzeug, viele Vorteile. Es wird eine Aufbewahrungsmöglichkeit für Akkuladegeräte bzw. Netzteile verschiedener Größen und Formen geschaffen. Die Halterung kann in einer gut erreichbaren Höhe an der Wagenkastenwand montiert werden, insbesondere neben einem Bügel zum Befestigen des Fahrrades. Die erfindungsgemäße Halterung bietet eine gesicherte Ablagemöglichkeit für das Netzteil, kann in verschiedenen Wagentypen und Umgebungen auf einfache Weise angebracht werden und bildet ein einfaches und intuitives Prinzip der Nutzung. Auch kann die Halterung auf sehr einfache Weise hergestellt werden und ist daher relativ kostengünstig.

Die Aufgabe wird ferner gelöst durch ein Verfahren zur Herstellung einer Halterung für ein elektronisches Gerät, insbesondere einer wie zuvor definierten Halterung, bei dem ein planares, das heißt ebenes, plattenförmiges Bauteil, insbesondere ein Blech oder Kunststoffteil, bereitgestellt wird, das sich von einem oberen Ende in vertikaler Richtung zu einem unteren Ende erstreckt, bei dem mindestens ein seitlicher Abschnitt des plattenförmigen Bauteils entlang einer Biegelinie umgebogen wird, wodurch mindestens ein sich vom übrigen Bauteil weg erstreckender Flügel gebildet wird, und bei dem das Bauteil an einer Wand montiert wird, wobei das Bauteil so ausgerichtet wird, dass die Biegelinie winkelig zur Schwerkraftrichtung verläuft.

Der Schritt des Umbiegens erfolgt derart, dass der Abstand, in einer Richtung senkrecht zur Vorderseite des Hauptkörpers, zwischen der dem Hauptkörper zugekehrten Innenfläche des mindestens einen Flügels und der Vorderseite des Hauptkörpers in Richtung vom oberen Ende zum unteren Ende des Hauptkörpers abnimmt. Dies wird insbesondere durch den winkligen Verlauf der Biegelinie erreicht, wobei in diesem Fall die Flügel nicht in sich gebogen sein müssen, sondern ebenfalls planare Elemente sein können.

Auch kann (alternativ oder zusätzlich) durch das Umbiegen zwischen dem mindestens einen Flügel und dem übrigen Bauteil ein Aufnahmeraum zur Aufnahme des elektronischen Geräts geformt werden, der in einem ersten (oberen) Abschnitt einen größeren Querschnitt als in einem zweiten (unteren) Abschnitt hat.

Wie bereits erwähnt, weist die Halterung vorzugsweise zwei Flügel auf. Dazu wird beim Schritt des Umbiegens insbesondere ein erster seitlicher Abschnitt des plattenförmigen Bauteils entlang einer ersten Biegelinie und ein zweiter seitlicher Abschnitt des plattenförmigen Bauteils entlang einer zweiten Biegelinie umgebogen, wobei die erste und die zweite Biegelinie winkelig zueinander und insbesondere auch winkelig zu der vertikalen Richtung verlaufen.

Beim Schritt des Bereitstellens des plattenförmigen Bauteils kann vorgesehen sein, dass das Bauteil aus einem plattenförmigen Rohling bzw. Ausgangskörper geformt wird, wobei das Formen insbesondere durch Ausschneiden, beispielsweise mittels eines Lasers, oder durch Ausstanzen erfolgt. Für den Fall, dass eine stromführende Steckdose in die Halterung integriert werden soll, kann beim Schritt des Bereitstellens des plattenförmigen Bauteils zusätzlich vorgesehen sein, dass aus einem plattenförmigen Rohling oder dem Bauteil ein Ausschnitt für die stromführende Steckdose geformt wird. Auch in diesem Fall kann das Formen durch Ausschneiden, beispielsweise mittels eines Lasers, oder durch Ausstanzen erfolgen.

Die Halterung kann also beispielsweise dadurch hergestellt werden, dass in einem ersten Schritt das plattenförmige Bauteil aus einem Ausgangskörper, beispielsweise einer Metallplatte, ausgeschnitten oder ausgestanzt wird, wobei auch ein Ausschnitt für eine stromführende Steckdose ausgeschnitten oder ausgestanzt werden kann. In einem zweiten Schritt wird dann der mindestens eine Flügel durch Umbiegen eines entsprechenden seitlichen Abschnitts des plattenförmigen Bauteils gebildet. Zum Formen von zwei Flügeln können jeweils zwei seitliche Abschnitte gleichzeitig oder nacheinander entsprechend umgebogen werden. In einem dritten Schritt kann dann noch die stromführende Steckdose montiert und/oder die Halterung an einer Wand befestigt werden.

Es gibt nun eine Vielzahl von Möglichkeiten, die erfindungsgemäße Halterung, das erfindungsgemäße Schienenfahrzeug und das erfindungsgemäße Verfahren auszugestalten und weiterzubilden. Hierzu sein einerseits verwiesen auf die dem Patentanspruch 1 nachgeordneten Patentansprüche, andererseits auf die Beschreibung eines Ausführungsbeispiels in Verbindung mit der Zeichnung. In der Zeichnung zeigen:
- Figuren 1a) bis c): eine Vorderansicht, eine Seitenansicht und eine Draufsicht einer erfindungsgemäßen Halterung,
- Fig. 2: eine perspektivische Ansicht der Halterung aus den Figuren 1a) bis c),
- Figuren 3a) bis c): Verfahrensschritte zur Herstellung einer Halterung gemäß den Figuren 1 und 2 und
- Fig. 4: die Halterung aus den Figuren 1 und 2 im montierten Zustand in einem Schienenfahrzeug.

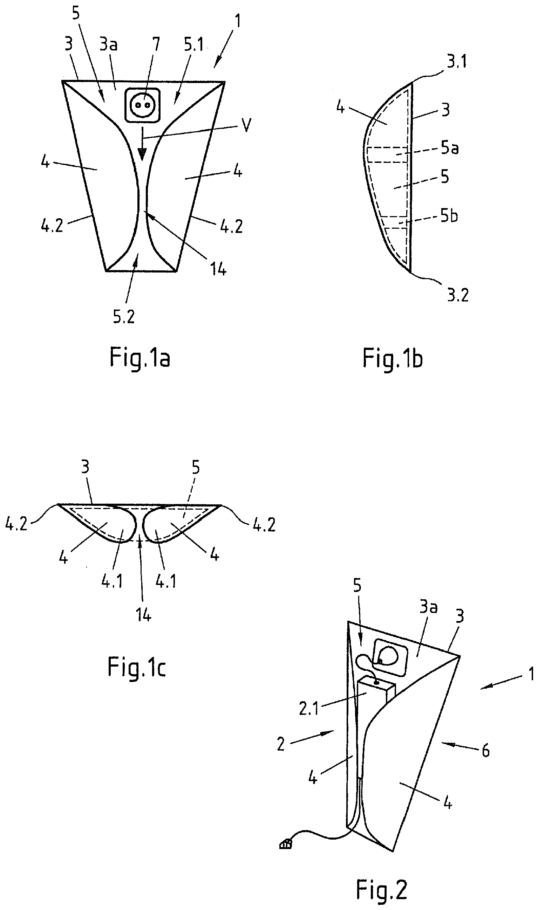

In Fig. 1a) ist eine Vorderansicht einer Halterung 1 für ein elektronisches Gerät 2.1, hier für ein Netzteil 2.1 eines Akku-Ladegeräts 2 eines Elektrofahrrads (nicht dargestellt) gezeigt. Fig. 1b) zeigt eine entsprechende Seitenansicht und Fig. 1c) eine entsprechende Draufsicht der Halterung 1.

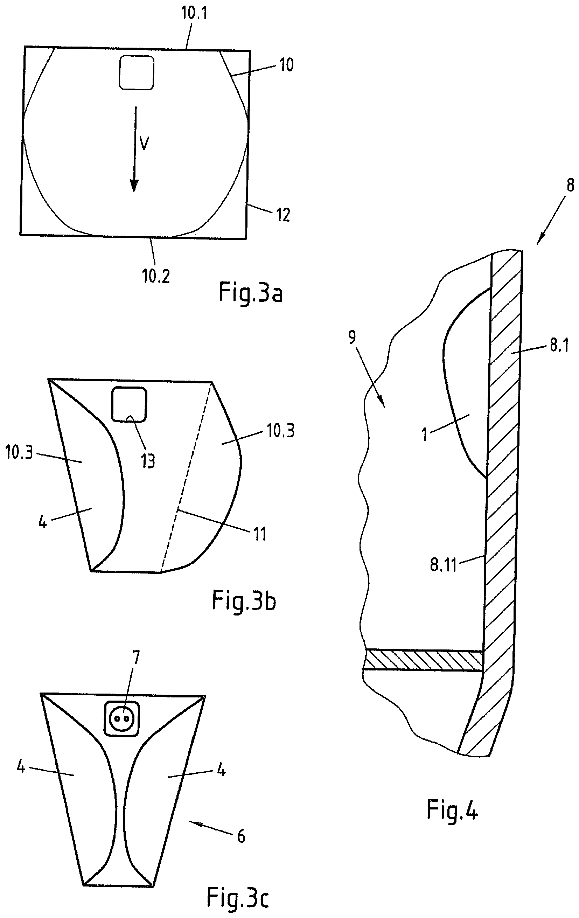

Die Halterung 1 weist einen Hauptkörper 3 und zwei Flügel 4 auf, die mit dem Hauptkörper 3 verbunden sind und sich vom Hauptkörper 3 weg erstrecken. Der Hauptkörper 3 und die beiden Flügel 4 sind aus einem ursprünglich plattenförmigen Bauteil 10 einstückig geformt. Die Herstellung wird im Weiteren noch anhand der Figuren 3a) bis c) erläutert.

Der Hauptkörper 3 erstreckt sich von einem oberen Ende 3.1 in vertikaler Richtung V zu einem unteren Ende 3.2 und weist eine Vorderseite 3a auf, die von den beiden Flügeln 4 in einer Richtung senkrecht zur Vorderseite 3a des Hauptkörpers 3 teilweise überdeckt bzw. überlagert wird. Mit anderen Worten sind die Abschnitte 10.3 des ursprünglich planaren plattenförmigen Bauteils 10 um mehr als 90°, insbesondere um einen Winkel in einem Bereich von 120° bis 160°, vorzugsweise in einem Bereich von 130° bis 150°, umgebogen worden. Dabei entsteht zwischen den Innenkonturen von Hauptkörper 3 und Flügeln 4 ein Aufnahmeraum 5, der in den Figuren 1b) und 1c) gestrichelt dargestellt ist. Der Aufnahmeraum ist der Raum, der für die Aufnahme eines zwischen Hauptkörper und Flügel eingeschobenen elektronischen Geräts 2.1 zur Verfügung steht (siehe Fig. 2).

Der Aufnahmeraum 5 ist mit einer im Bereich des oberen Endes 3.1 des Hauptkörpers 3 angeordneten Einführöffnung 5.1 und einer im Bereich des unteren Endes 3.2 des Hauptkörpers 3 angeordneten Ausführöffnung 5.2 versehen, wobei der Aufnahmeraum 5 einen im Wesentlichen in vertikaler Richtung V verlaufenden, barrierefreien Spalt 14 aufweist, der die Einführöffnung 5.1 mit der Ausführöffnung 5.2 verbindet.

Wie insbesondere die Figuren 1b), 1c) und 2 zeigen, verjüngt sich der Aufnahmeraum 5 in Richtung V vom oberen Ende 3.1 zum unteren Ende 3.2 des Hauptkörpers 3, indem hier der Abstand, in einer Richtung senkrecht zur Vorderseite 3a des Hauptkörpers 3, zwischen der dem Hauptkörper 3 zugekehrten Innenfläche der Flügel 4 und der Vorderseite 3a des Hauptkörpers 3 in vertikaler Richtung V, die hier gleich der Schwerkraftrichtung ist, abnimmt. Dabei ist der Querschnitt, in einem Schnitt in Richtung senkrecht zur Vorderseite 3a des Hauptkörpers 3, des Aufnahmeraums 5 in einem ersten, oberen Abschnitt 5a des Aufnahmeraums 5 größer als in einem zweiten, unteren Abschnitt 5b des Aufnahmeraums 5 (Fig.1b)). Insbesondere ist der Abstand zwischen der Innenfläche des jeweiligen Flügels 4 und der Vorderseite 3a des Hauptkörpers 3 in dem Aufnahmeraumabschnitt 5a mit dem größeren Querschnitt größer als in dem Aufnahmeraumabschnitt 5b mit dem kleineren Querschnitt (die Innenfläche des Flügels 4 wird von einem Abschnitt 4.1 des jeweiligen Flügels 4 gebildet, der von der Vorderseite 3a des Hauptkörpers 3 beabstandet ist). Auf diese Weise wird eine Trichterform geschaffen, die die Aufnahme von elektronischen Geräten bzw. Netzteilen 2.1 unterschiedlicher Größen und Formen erlaubt, wobei jedes in die Halterung 1 eingeführte Gerät 2.1 innerhalb der nach unten zusammenlaufenden Wände 3 und 4 der Halterung 1 einen Anschlag erfährt und gehalten wird.

Die Flügel 4 gehen seitlich vom Hauptkörper 3 aus, wobei jeder Flügel 4 jeweils ein Verbindungsende 4.2 aufweist, mit dem er mit dem Hauptkörper 3 verbunden ist. Das Verbindungsende 4.2 wird von der jeweiligen Biegelinie 11 gebildet, um die der jeweilige seitliche Abschnitt 10.3 bei der Herstellung der Halterung 1 umgebogen wird.

Wie die Figuren 1a),1c) und 2 veranschaulichen, sind die Flügel 4 außer mit deren Verbindungsende 4.2 nicht am Hauptkörper 3 fixiert. Auch sind die Flügel 4 nicht aneinander fixiert, sondern es ist ein Spalt 14 zwischen den vorderen Flügelenden (den vom Verbindungsende 4.2 des jeweiligen Flügels 4 abgewandten Kanten) ausgebildet.

Die Halterung 1 weist ferner eine stromführende Steckdose 7 auf, die, wie Fig. 2 zeigt, zur Aufnahme eines Steckers des elektronischen Geräts 2.1 dient, um beispielsweise den Akku eines Elektrofahrrads aufladen zu können. Im vorliegenden Ausführungsbeispiel ist die Steckdose 7 in die Halterung 1, insbesondere in den Hauptkörper 3, integriert.

In Fig. 3 ist beispielhaft ein Verfahren zur Herstellung einer Halterung 1, wie sie zuvor beschrieben wurde, dargestellt.

In Fig. 3a) ist ein Verfahrensschritt dargestellt, bei dem ein planares plattenförmiges Bauteil 10 bereitgestellt wird, indem dieses aus einem plattenförmigen Rohling 12, hier einer Metallplatte, mittels einer Laserschneideinrichtung (nicht dargestellt) ausgeschnitten wird. Gleichzeitig wird aus dem plattenförmigen Rohling 12 ein Ausschnitt 13 für die stromführende Steckdose 7 ausgeschnitten, ebenfalls mittels Laser. Das so erzeugte plattenförmige Bauteil 10 ist bezogen auf eine in vertikaler Richtung V gedachte Bauteil-Mittelachse spiegelsymmetrisch. Durch die Verwendung eines plattenförmigen Bauteils 10, insbesondere einer Metallplatte, ist gewährleistet, dass die den Aufnahmeraum 5 begrenzenden Innenwände des Hauptkörpers 3 und/oder des wenigstens einen Flügels 4 nach dem Fertigungsvorgang keine Vorsprünge und/oder Vertiefungen aufweisen.

In Fig. 3b) ist dargestellt, wie aus dem plattenförmigen Bauteil 10 ein Blechumformteil gebildet wird, nämlich indem jeweils seitliche Abschnitte 10.3 des plattenförmigen Bauteils 10 entlang einer jeweiligen Biegelinie 11 umgebogen werden, wodurch die Flügel 4 gebildet werden. Dabei ist erkennbar, dass die Biegelinien 11 winkelig zueinander und winkelig zur Schwerkraftrichtung V verlaufen, wodurch die in Fig. 3c) und Fig. 2 erkennbare Trichterform entsteht.

In Fig. 3c) ist schließlich noch ein Verfahrensschritt gezeigt, bei dem in den Ausschnitt 13 die stromführende Steckdose 7 eingesetzt wird. Die so hergestellte Halterung 1 entspricht der in Fig. 2 dargestellten.

Fig. 4 zeigt schließlich beispielhaft die Anordnung der erfindungsgemäßen Halterung 1 in einem Schienenfahrzeug 8. Das Schienenfahrzeug 8 weist einen Wagenkasten 8.1 auf, der wiederum eine Wagenkastenwand 8.11 aufweist. Neben einem Abschnitt der Wagenkastenwand 8.11 ist ein Fahrradstellplatz 9 vorgesehen, auf dem Elektrofahrräder abgestellt werden können.

Für den Fall, dass auf dem Fahrradstellplatz 9 ein Elektrofahrrad abgestellt wird, ist an dem Abschnitt der Wagenkastenwand 8.11 eine wie zuvor beschriebene Halterung 1 montiert. In dieser Halterung 1 kann das Netzteil 2.1 eines Akkuladegeräts 2 des Elektrofahrrads gehalten werden, während das Netzteil 2.1 über die zugehörige Verkabelung sowohl mit der Steckdose 7 als auch am anderen Ende mit dem Akku des Elektrofahrrads verbunden ist.

## Patentansprüche

1. Schienenfahrzeug (8) mit einem Fahrradstellplatz (9), **dadurch gekennzeichnet, dass** im Bereich des Fahrradstellplatzes (9) eine Halterung (1) für ein elektronisches Gerät (2.1), insbesondere für das Netzteil (2.1) eines Akku-Ladegeräts (2) eines Elektrofahrrads, montiert ist,
- mit einem Hauptkörper (3), der sich von einem oberen Ende (3.1) in vertikaler Richtung (V) zu einem unteren Ende (3.2) erstreckt und der eine Vorderseite (3a) aufweist,
- mit mindestens einem Flügel (4), der mit dem Hauptkörper (3) verbunden ist und sich wenigstens abschnittsweise vom Hauptkörper (3) weg erstreckt,
wobei der mindestens eine Flügel (4) zusammen mit dem Hauptkörper (3) einen Aufnahmeraum (5) zur Aufnahme des elektronischen Geräts (2.1) bildet, und den Aufnahmeraum (5) ausgehend vom Hauptkörper (3) zumindest teilweise hintergreift, wobei sich der Aufnahmeraum (5) in Richtung (V) vom oberen Ende (3.1) zum unteren Ende (3.2) des Hauptkörpers (3) verjüngt, wobei der Aufnahmeraum (5) mit einer im Bereich des oberen Endes (3.1) des Hauptkörpers (3) angeordneten Einführöffnung (5.1) und einer im Bereich des unteren Endes (3.2) des Hauptkörpers (3) angeordneten Ausführöffnung (5.2) versehen ist, wobei der Aufnahmeraum (5) einen im Wesentlichen in vertikaler Richtung (V) verlaufenden, barrierefreien Spalt (14) aufweist, der die Einführöffnung (5.1) mit der Ausführöffnung (5.2) verbindet, und wobei der oder die Flügel (4) zusammen mit dem Hauptkörper (3) einstückig ausgebildet und von einem einzigen Blechumformteil (6) gebildet ist/sind.

2. Schienenfahrzeug (8) nach Anspruch 1, **dadurch gekennzeichnet, dass** die den Aufnahmeraum (5) begrenzenden Innenwände des Hauptkörpers (3) und/oder des wenigstens einen Flügels (4) keine Vorsprünge und/oder Vertiefungen aufweisen.

3. Schienenfahrzeug (8) nach Anspruch 1 oder 2, **dadurch gekennzeichnet, dass** der oder die Flügel (4) seitlich vom Hauptkörper (3) ausgeht/ausgehen.

4. Schienenfahrzeug (8) nach einem der vorangehenden Ansprüche, **dadurch gekennzeichnet dass** der Hauptkörper (3) die gleiche Materialstärke wie der oder die Flügel (4) aufweist.

5. Schienenfahrzeug (8) nach einem der vorangehenden Ansprüche, **dadurch gekennzeichnet, dass** der Hauptkörper (3) und/oder der oder die Flügel (4) einen überwiegend ebenen Verlauf hat/haben.

6. Schienenfahrzeug (8) nach einem der vorangehenden Ansprüche, **dadurch gekennzeichnet, dass** der oder die Flügel (4) jeweils ein Verbindungsende (4.2) aufweist/aufweisen, mit dem er/sie mit dem Hauptkörper (3) verbunden ist/sind,
- wobei der oder die Flügel (4) außer mit dem Verbindungsende (4.2) nicht am Hauptkörper (3) fixiert ist/sind
und/oder
- wobei die Flügel (4) nicht aneinander fixiert sind und einander insbesondere nicht berühren.

7. Schienenfahrzeug (8) nach einem der vorangehenden Ansprüche, **dadurch gekennzeichnet, dass** die Halterung (1) eine stromführende Steckdose (7) aufweist, die insbesondere in den Hauptkörper (3) integriert ist.

8. Schienenfahrzeug (8) nach Anspruch 7, **dadurch gekennzeichnet, dass** die Steckdose (7) in der Richtung senkrecht zur Vorderseite (3a) des Hauptkörpers (3) nicht über die äußere Kontur des Flügels (4) oder der Flügel (4) hervorsteht.

9. Verfahren zur Herstellung einer Halterung (1) für ein elektronisches Gerät (2.1),
- bei dem ein planares plattenförmiges Bauteil (10) bereitgestellt wird, das sich von einem oberen Ende (10.1) in vertikaler Richtung (V) zu einem unteren Ende (10.2) erstreckt,
- bei dem mindestens ein seitlicher Abschnitt (10.3) des plattenförmigen Bauteils (10) entlang einer Biegelinie (11) umgebogen wird, wodurch mindestens ein sich vom übrigen Bauteil (10) weg erstreckender Flügel (4) gebildet wird, und
- bei dem das Bauteil (10) an einem Abschnitt einer Wagenkastenwand (8.11) eines Schienenfahrzeugs (8) montiert wird, wobei neben dem Abschnitt der Wagenkastenwand (8.11) ein Fahrradstellplatz (9) vorgesehen ist und wobei das Bauteil (10) so ausgerichtet wird, dass die Biegelinie (11) winkelig zur Schwerkraftrichtung (V) verläuft.

10. Verfahren nach Anspruch 9, **dadurch gekennzeichnet, dass** durch das Umbiegen das Bauteil (10) eine Form erhält,
- bei der der Abstand, in einer Richtung senkrecht zur Vorderseite (3a) des Hauptkörpers (3), zwischen der dem Hauptkörper (3) zugekehrten Innenfläche des mindestens einen Flügels (4) und der Vorderseite (3a) des Hauptkörpers (3) in Richtung (V) vom oberen Ende (3.1) zum unteren Ende (3.2) des Hauptkörpers (3) abnimmt
und/oder
- bei der zwischen dem mindestens einen Flügel (4) und dem übrigen Bauteil (10) ein Aufnahmeraum (5) zur Aufnahme des elektronischen Geräts (2.1) geformt wird, der in einem ersten Abschnitt (5a) einen größeren Querschnitt als in einem zweiten Abschnitt (5b) hat.

11. Verfahren nach Anspruch 9 oder 10, **dadurch gekennzeichnet, dass** beim Schritt des Bereitstellens des plattenförmigen Bauteils (10)
- das Bauteil (10) aus einem plattenförmigen Rohling (12) geformt, insbesondere ausgeschnitten oder ausgestanzt, wird
und/oder
- aus einem plattenförmigen Rohling (12) oder dem Bauteil (10) ein Ausschnitt (13) für eine stromführende Steckdose (7) geformt, insbesondere ausgeschnitten oder ausgestanzt, wird.

## Claims

1. Rail vehicle (8) with a bicycle storage space (9) **characterised in that** mounted in the area of the bicycle storage space (9) is a holder (1) for an electronic device (2.1), in particular for the power adapter (2.1) of an battery charger (2) of an electric bicycle,
- with a main body (3) which extends from an upper end (3.1) in the vertical direction (V) to a lower end (3.2) and which has a front side (3a)
- with at least one wing (4) which is connected to the main body (3) and extends at least in sections away from the main body (3),
wherein the at least one wing (4) together with the main body (3) forms a receiving space (5) for receiving the electronic device (2.1) and at least partially engages behind the receiving space (5) starting from the main body (3), wherein the receiving space (5) narrows in direction (V) from the upper end (3.1) to the lower end (3.2) of the main body (3), wherein the receiving space (5)is provided with a insertion opening (5.1) arranged in the area of the upper end (3.1) of the main body (3) and a removal opening (5.2) arranged in the area of the lower end (3.2) of the main body (3), wherein the receiving space (5) has a barrier-free gap (14) extending essentially in the vertical direction (V) which connects the insertion opening (5.1) with the removal opening (5.2) and wherein the wing(s) (4) together with the main body (3) is/are designed in one piece and formed from a single sheet metal formed part (6).

2. Rail vehicle (8) according to claim 1 **characterised in that** the inner walls of the main body (3) delimiting the receiving space (5) and/or the at least one wing (4) have no projections and/or recesses.

3. Rail vehicle (8) according to claim 1 or 2 **characterised in that** the wing(s) (4) start(s) laterally from the main body (3).

4. Rail vehicle (8) according to any one of the preceding claims **characterised in that** the main body (3) has the same material thickness as the wing(s) (4).

5. Rail vehicle (8) according to any one of the preceding claims **characterised in that** the main body (3) and/or the wing(s) (4) has/have a predominantly even progression.

6. Rail vehicle (8) according to any one of the preceding claims **characterised in that** the wing(s) (4) each has/have a connection end (4.2) with which it/they are connected to the main body (3),
- wherein apart from with the connection end (4.2) the wing(s) (4) is/are not fixed to the main body (3),
and/or
- wherein the wings (4) are not fixed to each other and in particular do not contact each other.

7. Rail vehicle (8) according to any one of the preceding claims **characterised in that** the holder (1) has a current-carrying socket (7) which, in particular, is integrated into the main body (3).

8. Rail vehicle (8) according to claim 7 **characterised in that** the socket (7) does not project beyond the outer contour of the wing (4) or the wings (4) in the direction perpendicular to the front side (3a) of the main body (3).

9. Method of manufacturing a holder (1) for an electronic device (2.1)
- in which a planar plate-shaped component (10) is provided which extends from an upper end (10.1) in the vertical direction (V) to a lower end (10.2),
- in which at least one lateral section (10.3) of the plate-shaped component (10) is bent along a bending line (11), through which a wing (4) extending away from the remainder of the component (10)is formed, and
- in which the component (10) is mounted on a section of a carriage body wall (8.11) of a rail vehicle (8), wherein next to the section of the carriage body wall (8.11) a bicycle storage space (9) is provided and wherein the component (10) is aligned in such a way that the bending line (11) extends at an angle to the direction of gravity (V).

10. Method according to claim 9 **characterised in that** through bending the component (10) takes on a shape
- in which the distance, in a direction perpendicular to the front side (3a) of the main body (3), decreases between the inner surface of the at least one wing (4) facing the main body (3) and the front side (3a) of the main body (3) in direction (V) from the upper end (3.1) to the lower end (3.2) of the main body (3)
and/or
- in which between the at least one wing (4) and the remainder of the component (10) a receiving space (5) is formed for receiving the electronic device (2.1) which in a first section (5a) has a larger cross-section than in a second section (5b).

11. Method according to claim 9 or 10 **characterised in that** in the stage of providing the plate-shaped component (10)
- the component (10) is formed, more particularly cut or punched out, from a plate-shaped blank (12)
and/or
- from a plate-shaped blank (12) or the component (10) a cut-out (13) for a current-carrying socket (7) is formed, in particular cut or punched out.

## Revendications

1. Véhicule sur rails (8) comprenant une place de stationnement pour vélo (9), **caractérisé en ce qu'**une fixation (1) est montée dans la zone de la place de stationnement pour vélo (9), ladite fixation étant prévue pour un appareil électronique (2.1), en particulier pour le bloc d'alimentation secteur (2.1) d'un chargeur de batterie (2) d'un vélo électrique, ladite fixation
- comprenant un corps principal (3) qui s'étend, dans le sens vertical (V), depuis une extrémité supérieure (3.1) jusqu'à une extrémité inférieure (3.2), et qui présente une face avant (3a),
- comprenant au moins une aile (4) qui est reliée au corps principal (3) et qui s'étend au moins partiellement en s'éloignant du corps principal (3),
où l'aile (4) au moins au nombre de un forme, en association avec le corps principal (3), un espace de logement (5) servant à recevoir l'appareil électronique (2.1), et entoure au moins partiellement l'espace de logement (5), à partir du corps principal (3), où l'espace de logement (5) se rétrécit, dans la direction (V), depuis l'extrémité supérieure (3.1) jusqu'à l'extrémité inférieure (3.2) du corps principal (3), où l'espace de logement (5) est doté d'une ouverture d'entrée (5.1) disposée dans la zone de l'extrémité supérieure (3.1) du corps principal (3) et d'une ouverture de sortie (5.2) disposée dans la zone de l'extrémité inférieure (3.2) du corps principal (3), où l'espace de logement (5) présente un intervalle (14), sans barrière, s'étendant pratiquement dans le sens vertical (V), lequel intervalle relie l'ouverture d'entrée (5.1) à l'ouverture de sortie (5.2), et où l'aile ou les ailes (4) est ou sont configurée(s) en formant une seule et même pièce avec le corps principal (3) et formée(s) à partir d'une unique pièce en tôle usinée par formage (6).

2. Véhicule sur rails (8) selon la revendication 1, **caractérisé en ce que** les parois intérieures du corps principal (3) et/ou de l'aile (4) au moins au nombre de un, qui délimitent l'espace de logement (5), ne présentent aucune partie en saillie et/ou aucune partie en creux.

3. Véhicule sur rails (8) selon la revendication 1 ou 2, **caractérisé en ce que** l'aile part ou les ailes (4) partent latéralement du corps principal (3).

4. Véhicule sur rails (8) selon l'une quelconque des revendications précédentes, **caractérisé en ce que** le corps principal (3) présente la même épaisseur de matériau que celle de l'aile ou des ailes (4).

5. Véhicule sur rails (8) selon l'une quelconque des revendications précédentes, **caractérisé en ce que** le corps principal (3) et/ou l'aile ou les ailes (4) a ou ont un profil principalement plan.

6. Véhicule sur rails (8) selon l'une quelconque des revendications précédentes, **caractérisé en ce que** l'aile présente ou les ailes (4) présentent à chaque fois une extrémité d'assemblage (4.2) par laquelle l'aile ou les ailes est ou sont reliée(s) au corps principal (3),
- où l'aile ou les ailes (4), en dehors de sa ou de leur fixation avec l'extrémité d'assemblage (4.2), n'est pas ou ne sont pas fixée(s) sur le corps principal (3), et/ou
- où les ailes (4) ne sont pas fixées l'une à l'autre et ne sont pas, en particulier, au contact l'une de l'autre.

7. Véhicule sur rails (8) selon l'une quelconque des revendications précédentes, **caractérisé en ce que** la fixation (1) présente une prise de courant (7) amenant le courant, ladite prise de courant étant intégrée en particulier dans le corps principal (3).

8. Véhicule sur rails (8) selon la revendication 7, **caractérisé en ce que** la prise de courant (7), suivant la direction perpendiculaire à la face avant (3a) du corps principal (3), ne dépasse pas du contour extérieur de l'aile (4) ou des ailes (4).

9. Procédé de fabrication d'une fixation (1) pour un appareil électronique (2.1),
- procédé au cours duquel est fourni un composant planaire (10) en forme de plaque, composant qui s'étend, dans le sens vertical (V), depuis une extrémité supérieure (10.1) jusqu'à une extrémité inférieure (10.2),
- procédé au cours duquel au moins une partie latérale (10.3) du composant (10) en forme de plaque est recourbée le long d'une ligne de pliage (11), faisant qu'au moins une aile (4) est formée en s'étendant en s'éloignant de l'autre composant (10), et
- procédé au cours duquel le composant (10) est monté sur une partie d'une paroi de caisse (8.11) d'un véhicule sur rails (8), où il est prévu, à proximité de la partie de la paroi de caisse (8.11), une place de stationnement pour vélo (9), et où le composant (10) est orienté de manière telle, que la ligne de pliage (11) s'étende de façon angulaire par rapport à la direction de gravité (V).

10. Procédé selon la revendication 9, **caractérisé en ce qu'**une forme est donnée au composant (10), sous l'effet du repliage,
- forme dans laquelle la distance, s'étendant suivant une direction perpendiculaire à la face avant (3a) du corps principal (3) et comprise entre la surface intérieure - tournée vers le corps principal (3) - de l'aile (4) au moins au nombre de un, et la face avant (3a) du corps principal (3), diminue dans la direction (V), depuis l'extrémité supérieure (3.1) jusqu'à l'extrémité inférieure (3.2) du corps principal (3),
et/ou
- forme dans laquelle un espace de logement (5), qui sert à recevoir l'appareil électronique (2.1), est formé entre l'aile (4) au moins au nombre de un et l'autre composant (10), espace de logement qui, dans une première partie (5a), a une section plus grande que celle dans une seconde partie (5b).

11. Procédé selon la revendication 9 ou 10, **caractérisé en ce que**, au cours de l'étape consistant à fournir le composant (10) en forme de plaque,
- le composant (10) est formé, en particulier découpé ou découpé à la matrice, à partir d'une pièce brute (12) en forme de plaque,
et/ou
- une découpe (13) pour une prise de courant (7) amenant du courant est formée, en particulier découpée ou découpée à la matrice, à partir d'une pièce brute (12) en forme de plaque ou à partir du composant (10).
